# EUROPÄISCHE PATENTANMELDUNG

(11) **EP 2 862 695 A1**
(43) Veröffentlichungstag der Anmeldung: **22.04.2015**
(21) Anmeldenummer: 14187240.8
(22) Anmeldetag: 01.10.2014
(51) Int. Cl.: B29C 63/34, F16L 55/165

(54) **Kunststoffrohr**

(30) Priorität: 15.10.2013 DE 202013104646 U
(71) Anmelder: REHAU AG + Co, 95111 Rehau (DE)
(72) Erfinder: Krause, Frank, 91301 Forchheim (DE); Steffl, Udo, 95466 Weidenberg (DE)

(57) **Zusammenfassung**

Die Erfindung betrifft ein Kunststoffrohr 1 zur Sanierung von Abwasserleitungen 2, wobei das Rohr 1 querschnittsreduzierend verformbar ist, um in eine zu sanierende Abwasserleitung 2 eingebracht zu werden, und anschließend rückverformbar ist, um sich von innen gegen die zu sanierende Abwasserleitung 2 zu legen, dadurch gekennzeichnet, dass das Rohr 1 an seiner Rohrinnenoberfläche 1.1 eine Schicht 3 aufweist, die ein Polyethylen und ein vernetztes Ethylencopolymer enthält.

## Beschreibung

Die Erfindung betrifft ein Kunststoffrohr zur Sanierung von Abwasserleitungen, wobei das Rohr querschnittsreduzierend verformbar ist, um in eine zu sanierende Abwasserleitung eingebracht zu werden. Anschließend wird das Kunststoffrohr rückverformt, um sich auf diese Weise von innen gegen die zu sanierende Abwasserleitung zu legen.

Solche gattungsgemäßen Rohre sind beispielsweise aus der DE 100 39 059 A1 oder der US 5,487,411 bekannt.

Ein solches Kunststoffrohr, welches sehr gut für die Herstellung von Hausanschlussanbindungen geeignet ist, ist aus der DE 20 2008 000 821 U1 bekannt. Dieses Rohr zeichnet sich dadurch aus, dass es an seiner Innenwand klebfähig ausgerüstet ist, um bei Hausanschlussanbindungen dort eine fluiddichte Verbindung des Nebenrohres mit dem Kunststoffrohr zu erreichen.

In einigen Fällen kann es auftreten, dass es bei den querschnittsreduzierend verformten Kunststoffrohren in Abhängigkeit zur Zeit, zur Temperatur und zum herrschenden Druck zu einer unerwünschten Verklebung der miteinander in Anlage kommenden modifizierten inneren Oberflächen kommt. Insbesondere wenn die querschnittsreduzierend verformten Kunststoffrohre auf einer Haspel aufgewickelt sind und auf diese dann beispielsweise über längere Zeit eine erhöhte Temperatur einwirkt, wie sie beispielsweise durch die Einwirkung der Sonnenstrahlen insbesondere in heißen Regionen der Erde auf das gelagerte aufgewickelte Kunststoffrohr auftreten kann, kann es im Anlagebereich der inneren Oberflächen zu dieser Verklebung kommen.

Ein solches Rohr ist dann nicht mehr rückverformbar und somit unbrauchbar.

Weiterhin hat sich herausgestellt, dass die klebfähig ausgerüstete Innenwand des Kunststoffrohres gegenüber abrasivem Abrieb, wie er durch den Fluss des Fluids im Rohr zustande kommt, nur eine begrenzte Beständigkeit aufweist.

Hier setzt die Erfindung ein, die es sich zur Aufgabe gemacht hat, ein Kunststoffrohr anzugeben, das die oben aufgezeigten Nachteile, was die unerwünschte Verklebung betrifft, überwindet und das weiterhin eine Innenoberfläche mit einer verbesserten Abriebbeständigkeit aufweist.

Eine weitere Aufgabe der vorliegenden Erfindung ist es, eine sanierte Abwasserleitung anzugeben, die mittels eines derart verbesserten Kunststoffrohres saniert ist.

Erfindungsgemäß wird die Aufgabe, ein Kunststoffrohr anzugeben, durch die im kennzeichnenden Teil des Anspruchs 1 angegebenen Merkmale gelöst.

Weitere vorteilhafte Ausgestaltungen der Erfindung sind in den Unteransprüchen angegeben.

Zur Lösung dieser Aufgabe stellt die Erfindung das Kunststoffrohr für die Sanierung von Abwasserleitungen gemäß Anspruch 1 bereit.
Das erfindungsgemäße Kunststoffrohr für die Sanierung von Abwasserleitungen ist querschnittsreduzierend verformbar, um in eine zu sanierende Abwasserleitung eingebracht zu werden und anschließend rückverformbar, um sich von innen gegen die zu sanierende Abwasserleitung zu legen, wobei das Rohr an seiner Rohrinnenoberfläche eine Schicht aufweist, die ein Polyethylen und ein vernetztes Ethylen-Copolymer enthält.

Durch das erfindungsgemäße Vorsehen einer Schicht an der Rohrinnenoberfläche des Rohres, die ein Polyethylen und ein vernetztes Ethylen-Copolymer enthält, wird einerseits erreicht, dass die Gefahr einer inneren Verklebung beim in Kontakt kommen der Innenoberfläche beim querschnittsreduziert verformten Rohr minimiert ist, andererseits ist durch die spezielle Zusammensetzung der Schicht an der Rohrinnenoberfläche des Rohres eine verbesserte Abriebbeständigkeit dieser Schicht gegeben.

Eine Mischung aus Polyethylen und einem vernetztem Ethylencopolymer wird als ein TPE-V, also als (teil)vernetztes thermoplastisches Elastomer, bezeichnet.
Das Polyethylen ist dabei ausschlaggebend für die Haftung dieser Schicht zum Kunststoffrohr, das vernetzte Elastomer für die Abriebbeständigkeit und einen Antisticking-Effekt, der dazu führt, dass an der Oberfläche dieser Schicht Materialien kaum oder nicht anhaften.

Durch die querschnittsreduzierte Verformung des Kunststoffrohres, die beispielsweise in U-Form oder in V-Form oder in X-Form oder in Y-Form oder in anderen Formen ausgebildet sein kann, wird erreicht, dass der lichte Querschnitt des derart querschnittsreduzierend verformten Kunststoffrohres kleiner ist als der Querschnitt der zu sanierenden Abwasserleitung.
Auf diese Weise lässt sich das derart querschnittsreduzierend verformte Kunststoffrohr leicht in eine zu sanierende Abwasserleitung einbringen.
Nach der richtigen Positionierung des querschnittsreduzierend verformten Kunststoffrohres in der zu sanierenden Abwasserleitung wird das querschnittsreduzierend verformte Kunststoffrohr durch Anwendung von Druck und / oder Temperatur durch die Wirkung des Memory-Effektes entfaltet und nimmt dabei etwa seine ursprüngliche Form wieder an. Hierbei legt sich das Kunststoffrohr von innen gegen die zu sanierende Abwasserleitung, die anschließend saniert ist.
Abschließend werden beispielsweise durch Fräs- bzw. Schneide- und Klebe- bzw. Schweißtechniken die notwendigen Anschlüsse an die sanierte Abwasserleitung hergestellt.

Vorteilhafte Weiterbildungen der Erfindung werden in den Unteransprüchen beansprucht.

In einer bevorzugten Ausführungsform der vorliegenden Erfindung ist das Kunststoffrohr derartig ausgebildet, dass das vernetzte Ethylen-Copolymer peroxidvernetzt ist.

Ein peroxidvernetztes Ethylen-Copolymer ist in besonders günstiger Weise dafür geeignet, dass die interne Verklebung minimiert bzw. ausgeschlossen ist. Ein solches Copolymer weist auch eine hohe Resistenz gegenüber Abrieb, wie er beispielsweise in Abwasserrohren durch die im Fluid mitgeführten Steine, durch Sand, durch Abfall oder andere abrasive Stoffe zustande kommt, in ganz erheblichem Umfang auf.

Eine weitere günstige Fortbildung der vorliegenden Erfindung betrifft ein Kunststoffrohr, das sich dadurch auszeichnet, dass das vernetzte Ethylen-Copolymer zu 5 % bis 80 % vernetzt ist.

Vernetzungsgrade des vernetzten Ethylen-Copolymers im Bereich von 5 % bis 80 % haben sich als vorteilhaft herausgestellt, was die Vermeidung der inneren Verklebung und die Verbesserung der Abriebfestigkeit betrifft.

In einer weiteren bevorzugten Weiterbildung der vorliegenden Erfindung ist vorgesehen, dass das vernetzte Ethylen-Copolymer 30 bis 50 Gew.-% Ethylenvinylacetat enthält.

Ein vernetztes Ethylen-Copolymer mit 30 bis 50 Gew.-% Ethylenvinylacetat ist im besonderen Maße dazu geeignet, ein Kunststoffrohr der vorliegenden Erfindung zu verbessern, was die Neigung zur Verhinderung der internen Verklebung und die Abriebfestigkeit der inneren Schicht des Rohres betrifft.

In einer weiteren sehr günstigen Fortbildung der vorliegenden Erfindung ist vorgesehen, dass die Schicht Funktionsfüllstoffe enthält, die die Abriebbeständigkeit der Schicht verbessern.
Solche Funktionsfüllstoffe können einerseits Stoffe sein, die die Gleitreibung der Schicht herabsetzen, um so die Abriebbeständigkeit zu erhöhen.
Hierzu eignen sich Stoffe, wie beispielsweise Silikonkautschukpartikel oder Fluorierte Polymere, wie Teflon. Andere Stoffe sind z. B. Molybdändisulfid oder spezielle Schichtsilikate.
Andererseits können andere Funktionsstoffe durch ihre Härte die Abriebbeständigkeit der Schicht erhöhen.
Hierzu können beispielsweise Glaskugeln oder Partikel von Siliciumcarbid eingesetzt werden.

Das Kunststoffrohr der vorliegenden Erfindung ist mit großem Vorteil dadurch gebildet, dass die Schicht an der Rohrinnenoberfläche des Rohres coextrudiert ist.

Ein solches Kunststoffrohr mit einer durch Coextrusion an der Rohrinnenoberfläche des Rohres gebildeten Schicht ist in einfacher Weise zugänglich, kostengünstig und im hohen Maße reproduzierbar. Durch die Wahl der Zusammensetzung der Schicht haftet diese bei der Coextrusion besonders gut an der Rohrinnenoberfläche des Kunststoffrohres.

In einer günstigen Weiterbildung der vorliegenden Erfindung kann vorgesehen sein, dass die Schicht an der Rohrinnenoberfläche des Rohres zusätzlich polares Material enthält und / oder deren Polarität durch eine Oberflächenbehandlung erhöht ist.

Durch diese Maßnahme, nämlich die Schicht an der Rohrinnenoberfläche des Rohres mit zusätzlichem polaren Material auszustatten und / oder die Polarität dieser Schicht durch Oberflächenbehandlung zu erhöhen, kann in vorteilhafterweise eine Verbesserung der fluiddichten Verklebung im Bereich eines Hausanschlusses erzielt werden.

Das Kunststoffrohr der vorliegenden Erfindung zeichnet sich in einer sehr günstigen Fortbildung dadurch aus, dass die Schicht an der Rohrinnenoberfläche des Rohres eine Abriebfestigkeit gemäß DIN 53516 (ISO 4649) von < 100 mm³, insbesondere von < 80 mm³ aufweist.

Die genannte Abriebfestigkeit der Rohrinnenoberfläche dokumentiert den gegenüber dem Stand der Technik verbesserten Effekt, der durch die vorliegende Erfindung erzielt werden konnte.

Von besonderem Vorteil ist die Schicht an der Rohrinnenoberfläche des Kunststoffrohres in einer weiteren Fortbildung der Erfindung derartig gewählt, dass diese eine Stärke von weniger als 50 % der Rohrwanddicke, vorzugsweise zwischen 0,2 mm bis 3 mm und ganz besonders bevorzugt von 1,0 bis 1,5 mm, aufweist.

Eine Schichtstärke von weniger als 50 % der Rohrwanddicke, vorzugsweise zwischen 0,2 mm bis 3 mm und ganz besonders bevorzugt 1,0 mm bis 1,5 mm ist in einfacher Weise produzierbar, kostengünstig und erfüllt die an sie gestellten Anforderungen hinsichtlich der Vermeidung der internen Verklebung und der erhöhten Abriebfestigkeit vollständig.

Weiterhin ist die Schicht in der genannten Stärke ganz besonders günstig dafür geeignet, dass diese querschnittsreduzierend verformbar ist und sich auch wieder rückverformen lässt.

Mit ganz besonderem Vorteil ist das Kunststoffrohr der vorliegenden Erfindung in einer weiteren Fortbildung derartig gebildet, dass die maximale Dehnfähigkeit der Schicht im Wesentlichen der Dehnfähigkeit der Tragschicht entspricht.

Durch das Vorsehen, dass sich die Dehnfähigkeit der Schicht und die Dehnfähigkeit der Tragschicht im Wesentlichen entspricht, kann das erfindungsgemäße Kunststoffrohr in einfacher Weise querschnittsreduzierend verformt werden, in eine zu sanierende Abwasserleitung eingebracht und darin rückverformt werden, um sich von innen gegen die zu sanierende Abwasserleitung anzulegen.

Schließlich umfasst die vorliegende Erfindung auch eine sanierte Abwasserleitung.

Die Aufgabe, eine sanierte Abwasserleitung anzugeben, erfährt ihre Lösung in Anspruch 10.

In die sanierte Abwasserleitung ist das Kunststoffrohr gemäß dieser Erfindung querschnittsreduzierend verformt eingebracht und anschließend rückverformt, um sich so von innen an der Abwasserleitung anzulegen und die Abwasserleitung zu sanieren.

Eine solche sanierte Abwasserleitung ist mit dem erfindungsgemäßen Kunststoffrohr in einfacher Weise saniert worden, wobei die vorstehend beschriebenen Vorteile hinsichtlich der Vermeidung der internen Verklebung und der erhöhten Abriebbeständigkeit erreicht werden.

Ein Ausführungsbeispiel der vorliegenden Erfindung betrifft ein Kunststoffrohr aus Polyethylen, welches die Tragschicht bildet. Auf der Innenseite des Kunststoffrohres ist eine Schicht angeordnet, die ein Polyethylen und ein vernetztes Ethylencopolymer enthält. Die Polymermaterialien sind wie folgt charakterisiert:
Das Rohr weist folgende Maße auf:
   Der Außendurchmesser beträgt ca. 290 mm.
   Die Schichtstärke der Tragschicht aus Polyethylen beträgt ca. 12,1 mm.
   Die Schichtstärke der Schicht, die ein Polyethylen und ein vernetztes Ethylencopolymer enthält, beträgt ca. 0,3 mm.
Das Rohr zeigt keine Verklebung der in Anlage gebrachten inneren Oberfläche unter folgenden Randbedingungen:
   Die Temperatur an der Rohrinnenseite beträgt bis zu ca.120 °C, bei mechanischem handfestem Zusammenpressen der Oberflächen der Innenschicht erfolgt keine Verklebung.
   Die Abriebfestigkeit der Schicht auf der Rohrinnenoberfläche beträgt 75 mm³ gemäß DIN 53516 (ISO 4649).
Die Dichte der Schicht auf der Rohrinnenoberfläche beträgt 0,940 bis 0,980 g/cm³ gemäß ISO 1183.
Die Reißdehnung der Schicht auf der Rohrinnenoberfläche ist größer als 230 %, insbesondere größer als 250 % gemäß ISO 37.
Der Druckverformungsrest der Schicht auf der Rohrinnenoberfläche ist größer als 70 % gemäß ISO 815 (PK B, 24 h, 70 °C).
Ein Rohr mit den vorstehend genannten Werten eignet sich besonders gut zur Sanierung einer Abwasserleitung.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Figuren dargestellt und werden in der nachfolgenden Beschreibung näher erläutert, wobei sich gleiche Bezugszeichen auf gleiche oder funktional gleiche oder ähnliche Bauteile beziehen.

Hierzu zeigt:
- Fig. 1: eine schematische Querschnittsansicht eines querschnittsreduzierend verformten Kunststoffrohres;
- Fig. 2: eine schematische Querschnittsansicht eines querschnittsreduzierend verformten Kunststoffes, das in eine zu sanierende Abwasserleitung eingebracht ist;
- Fig. 3: eine schematische Querschnittsansicht einer sanierten Abwasserleitung, in die ein Kunststoffrohr eingebracht ist;
- Fig. 4: eine schematische Querschnittsansicht einer sanierten Abwasserleitung, in die ein Kunststoffrohr eingebracht ist und
- Fig. 5: ein Detail aus Fig. 4 mit einer vergrößerten schematischen Querschnittsansicht einer sanierten Abwasserleitung, in die ein Kunststoffrohr eingebracht ist.

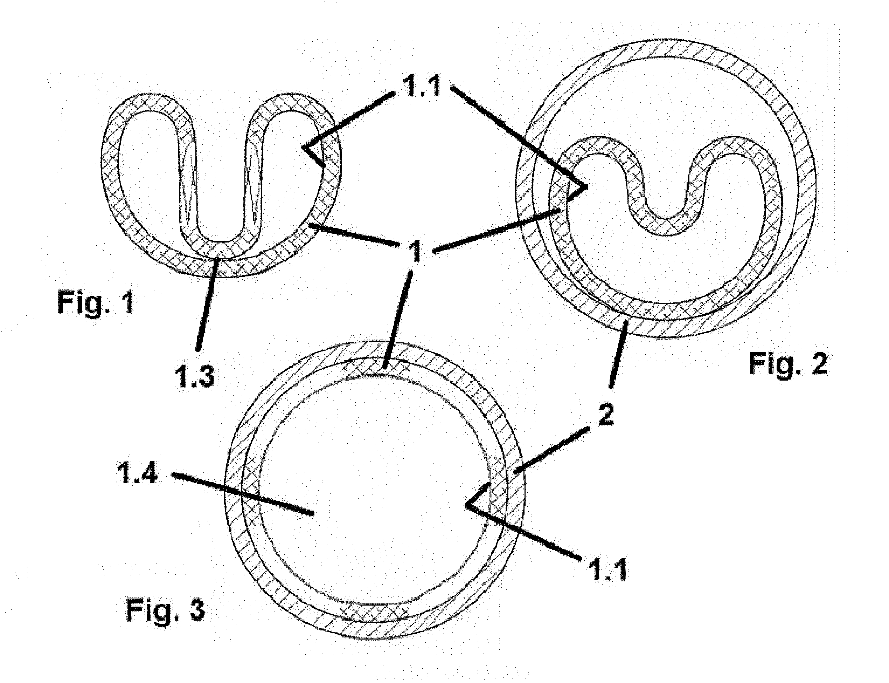

Fig. 1 zeigt in einer schematischen Querschnittsansicht ein Kunststoffrohr 1, welches querschnittsreduzierend verformt ist.

Die Verformung ist U-förmig ausgebildet, weshalb man bei solchen querschnittsreduzierend verformten Rohren mit einer U-Form auch von "U-Linern" spricht. Das Kunststoffrohr 1 ist derartig verformt, dass es zu einem Anlageabschnitt 1.3 kommt, bei dem die Rohrinnenoberfläche 1.1 des Kunststoffrohres 1 mit sich in Anlage gebracht ist.
Je nach Verformungsgrad des Kunststoffrohres kann dabei der Anlageabschnitt 1.3 auch wesentlich größer ausgebildet sein als in Fig. 1 schematisch dargestellt.

Fig. 2 zeigt in einer schematischen Querschnittsansicht ein querschnittsreduzierend verformtes Kunststoffrohr 1, das in eine Abwasserleitung 2, die saniert werden soll, eingebracht ist.

Durch die querschnittsreduzierte Verformung des Kunststoffrohres 1 weist dieses einen kleineren Querschnitt auf, als die lichte Weite der zu sanierenden Abwasserleitung 2. Auf diese Weise lässt sich das Kunststoffrohr 1 in einfacher Weise in die zu sanierende Abwasserleitung 2 einbringen.

In Fig. 3 ist eine schematische Querschnittsansicht einer sanierten Abwasserleitung 2 dargestellt.

Die sanierte Abwasserleitung 2 ist durch ein Kunststoffrohr 1, welches zunächst querschnittsreduzierend verformt war und in die zu sanierende Abwasserleitung 2 eingebracht wurde, und anschließend rückverformt worden ist und sich dabei von innen gegen die zu sanierende Abwasserleitung 2 gelegt hat, saniert worden.

Das Lumen 1.4 des Kunststoffrohres 1 weist dabei annähert die Größe des ursprünglich bei der Abwasserleitung 2 vorhandenen Lumens auf, so dass Abwasser nahezu ungehindert durch die nun sanierte Abwasserleitung 2 fließen kann.

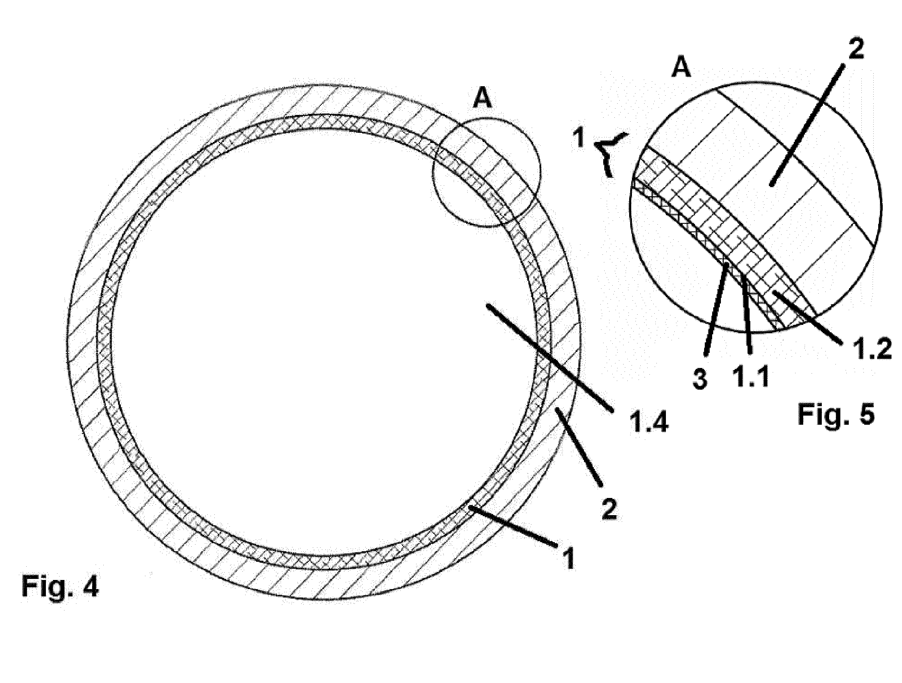

Fig. 4 zeigt eine schematische Querschnittsansicht einer sanierten Abwasserleitung 2.

Hierzu ist ein Kunststoffrohr 1 von innen gegen die zu sanierende Abwasserleitung 2 gelegt worden und kleidet diese innen aus. Auf diese Weise sind etwaige Beschädigungen, Wurzeleinwüchse, Fugen- bzw. Stoßversätze und andere den Strom des Fluids in der Abwasserleitung 2 behindernde Situationen durch das Kunststoffrohr 1 behoben bzw. repariert.

Das Abwasser kann in dem Lumen 1.4 des Kunststoffrohres 1 in der sanierten Abwasserleitung 2 frei fließen.

In Fig. 5 ist ein Detail A aus Fig. 4 in einer schematischen Querschnittsansicht der sanierten Abwasserleitung 2 im Detail gezeigt.

Die sanierte Abwasserleitung 2 weist an ihrer Innenseite ein Kunststoffrohr 1 auf, das von innen gegen die Abwasserleitung 2 gelegt ist. Das Kunststoffrohr 1 umfasst dabei eine Tragschicht 1.2 und eine mit der Tragschicht 1.2 fest verbundene Schicht 3. Die Schicht 3 ist dabei an der Rohrinnenoberfläche 1.1 des Kunststoffrohres 1 an der Tragschicht 1.2 angeordnet. In einer bevorzugten Ausführungsform der Erfindung sind dabei die Tragschicht 1.2 und die Schicht 3 untrennbar miteinander verbunden.

Die Schicht 3 ist wesentlich dünner ausgebildet, als die Tragschicht 1.2, was in der Fig. 5 schematisch angedeutet ist.

Das Kunststoffrohr 1 ist dabei derartig in der Abwasserleitung 2 angeordnet, dass die Schicht 3 zum Lumen 1.4 des Kunststoffrohres 1 hinweist und die Tragschicht 1.2 zur Abwasserleitung 2.

### Bezugszeichenliste

- 1: Kunststoffrohr
- 1.1: Rohrinnenoberfläche
- 1.2: Tragschicht
- 1.3: Anlageabschnitt
- 1.4: Lumen
- 2: Abwasserleitung
- 3: Schicht
- A: Detailansicht

## Patentansprüche

1. Kunststoffrohr (1) zur Sanierung von Abwasserleitungen (2), wobei das Rohr (1) querschnittsreduzierend verformbar ist, um in eine zu sanierende Abwasserleitung (2) eingebracht zu werden, und anschließend rückverformbar ist, um sich von innen gegen die zu sanierende Abwasserleitung (2) zu legen, **dadurch gekennzeichnet, dass** das Rohr (1) an seiner Rohrinnenoberfläche (1.1) eine Schicht (3) aufweist, die ein Polyethylen und ein vernetztes Ethylencopolymer enthält.

2. Kunststoffrohr (1) nach Anspruch 1, **dadurch gekennzeichnet, dass** das vernetzte Ethylencopolymer peroxidvernetzt ist.

3. Kunststoffrohr (1) nach einem Ansprüche 1 oder 2, **dadurch gekennzeichnet, dass** das vernetzte Ethylencopolymer zu 5 bis 80 % vernetzt ist.

4. Kunststoffrohr (1) nach einem der vorangehenden Ansprüche, **dadurch gekennzeichnet, dass** das vernetzte Ethylencopolymer 30 bis 50 Gew.-% Ethylenvinylacetat enthält.

5. Kunststoffrohr (1) nach einem der vorangehenden Ansprüche, **dadurch gekennzeichnet, dass** die Schicht (3) an die Rohrinnenoberfläche (1.1) des Rohres (1) koextrudiert ist.

6. Kunststoffrohr (1) nach einem der vorangehenden Ansprüche, **dadurch gekennzeichnet, dass** die Schicht (3) an der Rohrinnenoberfläche (1.1) des Rohres (1) zusätzlich polares Material enthält und / oder deren Polarität durch Oberflächenbehandlung erhöht ist.

7. Kunststoffrohr (1) nach einem der vorangehenden Ansprüche, **dadurch gekennzeichnet, dass** die Schicht (3) an der Rohrinnenoberfläche (1.1) des Rohres (1) eine Abriebfestigkeit gemäß DIN 53516 (ISO 4649) von kleiner 100 mm³, insbesondere kleiner 80 mm³ aufweist.

8. Kunststoffrohr (1) nach einem der vorangehenden Ansprüche, **dadurch gekennzeichnet, dass** die Schicht (3) an der Rohrinnenoberfläche (1.1) des Rohres (1) eine Stärke von weniger als 50 % der Rohrwanddicke, vorzugsweise zwischen 0,2 mm bis 3,0 mm, bevorzugt 1,0 mm bis 1,5 mm, aufweist.

9. Kunststoffrohr (1) nach einem der vorangehenden Ansprüche, **dadurch gekennzeichnet, dass** die maximale Dehnfähigkeit der Schicht (3) im Wesentlichen der Dehnfähigkeit der Tragschicht (1.2) entspricht.

10. Sanierte Abwasserleitung (2), in welche ein Kunststoffrohr (1) nach einem der Ansprüche 1 bis 9 querschnittsreduziert verformt eingebracht und anschließend rückverformt ist und von innen an der Abwasserleitung (2) anliegt.
